# EUROPEAN PATENT APPLICATION

(11) **EP 4 067 443 A1**
(43) Date of publication of application: **05.10.2022**
(21) Application number: 22161996.8
(22) Date of filing: 14.03.2022
(51) Int. Cl.: C09D 7/62, C09D 7/40, C08J 7/04, H01M 10/052, H01M 50/40

(54) **AL2O3-PMMA COMPOSITE MATERIAL WITH HIGH ADHESIVE PROPERTY AND HIGH WETTING EFFICIENCY AND PREPARATION METHOD THEREOF, AND POLYOLEFIN COMPOSITE SEPARATOR**

(30) Priority: 15.03.2021 CN 202110275688
(71) Applicant: Jiangsu Horizon New Energy Tech Co., Ltd, Jintan District Changzhou Jiangsu 213000 (CN)
(72) Inventor: LIU, Ke, Changzhou, 213000 (CN); WENG, Xingxing, Changzhou, 213000 (CN); CHEN, Zhaohui, Changzhou, 213000 (CN); SHENG, Xia, Changzhou, 213000 (CN)
(74) Representative: Bayramoglu et al.

(57) **Abstract**

The present invention provides an Al₂O₃-PMMA composite material, which comprises Al₂O₃ particles and a polymethyl methacrylate (PMMA) layer compounded on a surface of the Al₂O₃. The composite material has an appearance of a spheroidal particle. The composite material has a core-shell structure. A mass ratio of the Al₂O₃ to the PMMA is 1: (30-50). A molecular weight of the PMMA is 80000-200000 g/mol. According to the present invention, the Al₂O₃ particles are completely included inside the PMMA, so that core-shell particles having high adhesive property and high wetting efficiency are obtained. A composite polyolefin separator provided by the present invention has the advantages that the wetting efficiency is high, electrolyte solution can more uniformly fill pores of the separator; shrinkage of the separator can be inhibited; the thermal stability is improved; furthermore, the particles have a larger particle size and are regularly stacked; and the thermal shrinkage of the separator is more obviously inhibited, so that the thermal stability of the separator is more outstanding.

## Description

### TECHNICAL FIELD

The present invention belongs to the technical field of lithium ion battery separator materials, relates to an Al₂O₃-PMMA composite material and a preparation method thereof, and a polyolefin composite separator, and in particular to an Al₂O₃-PMMA composite material with high adhesive property and high-wetting efficiency and a preparation method thereof, and a polyolefin composite separator.

### BACKGROUND

A lithium ion battery has the advantages of high energy density, long service life, good charging and discharging performance and the like, and has become the first choice of energy storage equipment in the field of new energy automobiles. The trend of development of a power lithium ion battery towards a high energy density is increasingly obvious under the influence of factors such as endurance mileage and state subsidies. Although the energy density of a battery is improved to a great extent by the application of a novel main material, the safety performance of the battery is also greatly challenged, such as a short-circuit risk caused by a poor thermal stability of a high-nickel cathode material (such as nickel cobalt manganese 622, nickel cobalt manganese 811, nickel cobalt aluminum, and lithium nickel manganese oxide), volume expansion of a silicon carbon material in charging and discharging processes, and a decrease in the thickness of the separator. As a core component of a pure electric new energy automobile, the safety problem of the lithium ion battery has become one of key indexes that restrains the further development of the lithium ion battery. A safety accident of the lithium ion battery is mainly related to the composition, design and manufacturing process of a battery cell except a design defect of a battery pack, abuse use and impact of an external environment. The composition of the battery cell is particularly critical to the influence on the safety performance.

As one of four main materials of the lithium ion battery, the separator has great influence on the comprehensive performance of the lithium ion battery, and particularly, in the aspect of the safety performance. The separator is located between a cathode and an anode and plays roles of preventing the battery from being short-circuited and providing an electrolyte ion channel. An existing lithium ion battery separator is mainly a polyolefin separator. However, the polyolefin separator is a nonpolar material and has a large difference with a polar electrolyte solution, so that the wettability of the electrolyte solution and the wettability of a polyolefin microporous membrane are poor. In a battery assembly process, there are problems of long waiting time, high energy consumption, high reject ratio of the battery, and the like. Furthermore, the polyolefin microporous separator has a larger shrinking rate at a high temperature, which causes contact between the cathode and the anode, so that the battery has a short circuit, resulting in battery combustion, explosion, and other accidents.

Therefore, how to find a suitable method to solve the above problems in the existing separator has become a key problem that restrains the rapid development of the separator on the premise of ensuring that the comprehensive performance of a product is not affected, and is one of the key technical problems to be urgently solved in the industry.

### SUMMARY

In view of this, the technical problem to be solved in the present invention is to provide an Al₂O₃-PMMA composite material and a preparation method thereof, and a polyolefin composite separator, and in particular to an Al₂O₃-PMMA composite material with high adhesive property and high wetting efficiency and a corresponding aqueous slurry. The composite separator provided by the present invention contains Al₂O₃-PMMA particles, which can inhibit the shrinkage of the separator and improve the thermal stability of the separator. Furthermore, a preparation process is simple and is suitable for industrial popularization and application.

The present invention provides an Al₂O₃-PMMA composite material, which comprises Al₂O₃ particles and a polymethyl methacrylate (PMMA) layer compounded on a surface of the Al₂O₃; wherein
the composite material has an appearance of spheroidal particles;
the composite material has a core-shell structure;
a mass ratio of the Al₂O₃ to the PMMA is 1: (30-50);
a molecular weight of the PMMA is 80000-200000 g/mol.

Preferably, the Al₂O₃ particles have a particle size of 0.6-1.5 µm;
the Al₂O₃-PMMA composite material has a particle size of 1.0-3.0 µm.

The present invention provides a preparation method for the Al₂O₃-PMMA composite material in any one of the above technical solutions, which comprises the following steps:
1) mixing a methyl methacrylate solution and Al₂O₃ powder to obtain a mixed solution; and
2) mixing the mixed solution obtained in the above step with an oxidization-modified polyvinyl acetate (PVA) solution again, grinding the mixture, and drying the mixture to obtain Al₂O₃-PMMA particles.

Preferably, a mass concentration of the methyl methacrylate solution is 35-45%;
a particle size of the Al₂O₃ powder is 0.6-1 µm;
a mixing time is 20-60 min;
a rotation speed for mixing is 500-800 rpm.

Preferably, the oxidation-modified PVA solution comprises an oxidation-modified PVA aqueous solution;
a method for the oxidation modification comprises oxidation modification for potassium persulfate;
a mass ratio of the potassium persulfate to the PVA is 1: (330-400);
a remixing time is 10-15 min;
a grinding time is 3-10 min.

The present invention provides an aqueous slurry for preparing a polyolefin composite separator which comprises raw materials in percentage by mass:
20-62 parts by weight of an Al₂O₃-PMMA composite material;
16-75 parts by weight of water;
0.1-1.1 parts by weight of a dispersant;
5-13 parts by weights of an anti-settling agent;
3-11 parts by weight of a binder; and
0.1-0.8 part by weight of a wetting agent; wherein
the Al₂O₃-PMMA composite material comprises the Al₂O₃-PMMA composite material in any one of the above technical solutions or the Al₂O₃-PMMA composite material prepared by the preparation method in any one of the above technical solutions.

Preferably, the dispersant comprises polyacrylamide;
the anti-settling agent comprises sodium carboxymethyl cellulose;
the binder comprises one or more of butylbenzene latex, cinnamic acid, polyvinyl alcohol, polyvinylpyrrolidone, polyethylene oxide, modified paraffin resin, carbomer resin, polyacrylic acid, polyurethane acrylate, polyacrylate copolymer emulsion, polyurethane and carbamate;
the wetting agent comprises one or more of an organic silicon ether surfactant, an anionic surfactant and a nonionic surfactant;
the anionic surfactant comprises one or more of alkyl aryl sodium sulfonate, sodium butylnaphthalene sulfonate, hydroxyethyl sodium sulfonate and sodium dodecyl sulfonate;
the nonionic surfactant comprises one or more of long-chain fatty alcohol-polyoxyethylene ether, alkylphenol ethoxylate, polyoxyethylene alkylolamide and fatty alcohol-polyoxyethylene ether.

The present invention provides a polyolefin composite separator, which comprises a polyolefin base membrane; and
a composite material coating layer compounded on at least one surface of the polyolefin base membrane; wherein
the composite material comprises the Al₂O₃-PMMA composite material in any one of the above technical solutions or the Al₂O₃-PMMA composite material prepared by the preparation method in any one of the above technical solutions.

Preferably, the composite material coating layer has a micro-appearance of stacked arrangement of the Al₂O₃-PMMA particles;
the Al₂O₃-PMMA particles are uniformly distributed on a surface of the polyolefin base membrane;
the polyolefin base membrane comprises a polyethylene base membrane and/or a polypropylene base membrane;
the composite material coating layer is obtained by coating the polyolefin base membrane with the aqueous slurry in any one of the above technical solutions;
a method for the coating comprises one or more of reverse gravure roller coating, rotary spraying, dip coating, electrostatic spinning, and narrow-slit extrusion coating.

Preferably, the polyolefin base membrane is a microporous membrane;
a median pore diameter of the polyolefin base membrane is 25-70 nm;
a thickness of the polyolefin base membrane is 3-25 µm;
a thickness of the composite material coating layer is 1-5 µm;
the polyolefin composite separator comprises a polyolefin composite separator for a lithium ion battery.

The present invention provides an Al₂O₃-PMMA composite material, which comprises Al₂O₃ particles and a polymethyl methacrylate (PMMA) layer compounded on a surface of the Al₂O₃. The composite material has an appearance of a spheroidal particle. The composite material has a core-shell structure. A mass ratio of the Al₂O₃ to the PMMA is 1: (30-50). A molecular weight of the PMMA is 80000-200000 g/mol. Compared with the prior art, the present invention aims at the problem that in the existing lithium ion battery separator, the wettability of the polyolefin microporous membrane is poor; in the battery assembly process, there are problems of long waiting time, high energy consumption, high reject ratio of the battery, and the like. Furthermore, the polyolefin microporous separator has a larger shrinking rate at a high temperature, which causes contact between the cathode and the anode, so that the battery has a short circuit, resulting in battery combustion, explosion, and other accidents. In addition, since there are no adhesive substances on surfaces of the polyolefin microporous separator and the ceramic coated membrane during the battery assembly, a pole piece cannot be adhered. In order to increase the adhesion for the pole piece, and particularly to coat the surfaces of the polyolefin microporous separator and the ceramic separator with an adhesive substance, secondary coating is required, so that the efficiency is low, and the cost is high.

The present invention provides an Al₂O₃-PMMA composite material. Particularly, aluminum oxide and PMMA are compounded to obtain a composite material having a specific core-shell structure. This is an Al₂O₃-PMMA core-shell particle having high adhesive property and high wetting efficiency. The present invention adopts the PMMA to completely include the Al₂O₃ particles inside to form spherical particles. Firstly, Al₂O₃ is an inorganic nonpolar material which has stable property and heat shrinkage resistance. PMMA is commonly called acrylic glue. The PMMA in the present invention has two functions. The first function is to include the aluminum oxide particles, and the second function is to provide an adhesion force for adhesion between the separator and the pole piece, so that the composite polyolefin separator coated with the Al₂O₃-PMMA core-shell particles and provided by the present invention has the heat shrinkage resistance of the aluminum oxide and the adhesive property of the PMMA. Furthermore, in the present invention, PVA subjected to oxidation treatment is particularly used. PVA (polyvinyl alcohol) is a water-soluble synthetic polymer. A PVA solution is treated with potassium persulfate so that a part of molecular chains of the PVA are broken to introduce a terminal carboxyl group or an aldehyde group, and a ketone group is introduced into the molecular chains.

Since it is coated with the Al₂O₃-PMMA core-shell particles, the composite polyolefin separator provided by the present invention has higher wetting efficiency than conventional polyethylene (PE) and polypropylene (PP) base membranes and polyvinylidene fluoride (PVDF) coated membrane. A contact angle of the Al₂O₃-PMMA coated membrane is 21.4 degrees, which indicates that the Al₂O₃-PMMA coated membrane has higher wettability for an electrolyte solution. This is based on similar polarities of the PMMA and the electrolyte solution, and the rule of the likes dissolving each other is used, so that the wettability of the electrolyte solution for the coating layer can be improved. In the lithium ion battery, the electrolyte solution can fill the pores of the separator more uniformly. According to the composite separator provided by the present invention, the surface of the base membrane is coated with the Al₂O₃-PMMA particles, so that the shrinkage of the separator can be inhibited, and the thermal stability of the separator is improved. Furthermore, the Al₂O₃-PMMA particles have a larger particle size, are regularly stacked on the surface of the separator, and have a more obvious inhibiting effect on the thermal shrinkage of the separator, so that the thermal stability of the separator is more outstanding. Furthermore, the preparation process is simple and is suitable for industrial popularization and application.

Experimental results show that the composite separator containing the Al₂O₃-PMMA particle coating layer and provided by the present invention has low air permeability increment (the increment per unit thickness is less than 10 S/100 mL); the hot-pressing bonding force reaches 15 N/m or above; the thermal shrinkage is improved compared with that of the PE separator; and the thermal shrinkage of the Al₂O₃-PMMA coated membrane is less than 1.0%.

### BRIEF DESCRIPTION OF THE DRAWINGS

FIG. 1 is a flow chart of a preparation process for a polyolefin composite separator provided according to the present invention;
FIG. 2 is a scanning electron microscopy (SEM) scanning electron micrograph of Al₂O₃-PMMA powder particles prepared in Embodiment 1 of the present invention;
FIG. 3 is an SEM scanning electron micrograph of a polyolefin composite separator prepared in Embodiment 1 of the present invention; and
FIG. 4 is a contact angle image of an Al₂O₃-PMMA slurry prepared according to the present invention.

### DETAILED DESCRIPTION

In order to further understand the present invention, preferred implementation solutions of the present invention are described in combination with embodiments, but it should be understood that these descriptions only further illustrate the features and advantages of the present invention and are not intended to limit the claims of the present invention.

All raw materials of the present invention are not particularly limited in source, and may be purchased commercially or prepared according to conventional methods well known to those skilled in the art.

All raw materials of the present invention are not particularly limited in purity, and the present invention preferably adopts analytic purity or conventional purity used in the field of preparation of lithium ion battery separators.

The present invention provides an Al₂O₃-PMMA composite material, which comprises Al₂O₃ particles and a polymethyl methacrylate (PMMA) layer compounded on a surface of the Al₂O₃; wherein
the composite material has an appearance of spheroidal particles;
the composite material has a core-shell structure;
a mass ratio of the Al₂O₃ to the PMMA is 1: (30-50);
a molecular weight of the PMMA is 80000-200000 g/mol.

In the present invention, the particle size of the Al₂O₃ particles is preferably 0.6-1.5 µm, more preferably 0.8-1.3 µm, and still more preferably 1.0-1.1 µm.

In the present invention, the particle size of the Al₂O₃-PMMA composite material is preferably 1.0-3.0 µm, more preferably 1.2-2.8 µm, more preferably 1.5-2.5 µm, and still more preferably 1.8-2.3 µm.

In the present invention, the composite material has an appearance of spheroidal particles. That is, the Al₂O₃-PMMA composite material provided by the present invention is an Al₂O₃-PMMA particle.

In the present invention, the mass ratio of the Al₂O₃ to the PMMA is 1: (30-50), preferably 1: (32-48), more preferably 1: (35-45), and still more preferably 1: (38-43).

In the present invention, the molecular weight of PMMA is 80000-200000 g/mol, preferably 100000-180000 g/mol, and more preferably 120000-160000 g/mol.

The present invention provides a preparation method for the Al₂O₃-PMMA composite material in any one of the above technical solutions, which comprises the following steps:
1) mixing a methyl methacrylate solution and Al₂O₃ powder to obtain a mixed solution; and
2) mixing the mixed solution obtained in the above step with an oxidization-modified polyvinyl acetate (PVA) solution again, grinding the mixture, and drying the mixture to obtain Al₂O₃-PMMA particles.

According to the present invention, firstly, a methyl methacrylate solution and Al₂O₃ powder are mixed to obtain a mixed solution.

In the present invention, the mass concentration of the methyl methacrylate solution is preferably 35-45%, more preferably 37-43%, and still more preferably 39-41%.

In the present invention, the particle size of the Al₂O₃ powder is preferably 0.6-1 µm, more preferably 0.65-0.95 µm, more preferably 0.7-0.9 µm, and still more preferably 0.75-0.85 µm.

In the present invention, the mixing method preferably comprises stirring and mixing. A mixing time is preferably 20-60 min, more preferably 30-60 min, and still more preferably 40-60 min. A rotation speed for mixing is preferably 500-800 rpm, more preferably 550-750 rpm, and still more preferably 600-700 rpm.

In the present invention, the mixed solution obtained in the above steps is then mixed with an oxidization-modified PVA solution again and ground; and the mixture is dried to obtain Al₂O₃-PMMA particles.

In the present invention, the oxidation-modified PVA solution preferably comprises an oxidation-modified PVA aqueous solution, i.e., the solution is preferably an aqueous solution.

In the present invention, a method for the oxidation modification comprises oxidation modification for potassium persulfate. That is, the present invention modifies PVA with the potassium persulfate.

In the present invention, a mass ratio of the potassium persulfate to the PVA is preferably 1: (330-400), more preferably 1: (340-390), more preferably 1: (350-380), and still more preferably 1: (360-370).

The present invention is a complete and refined integral preparation process, which better ensures the appearance and performance of the Al₂O₃-PMMA composite material and the performance of the polyolefin composite separator, and specific steps of modifying the PVA with the potassium persulfate may be as follows:
preparation of a PVA glue solution: dissolving PVA powder using water at a temperature of 60-90 °C, preparing a required concentration, and using high-temperature water to accelerate the dissolution, wherein a stirring speed is 300-600 rpm;
oxidation treatment of the PVA: treating the PVA solution with the potassium persulfate, and performing stirring and mixing at 500-800 rpm; and oxidization modification of the PVA: breaking a part of molecular chains of the PVA to introduce a terminal carboxyl group or aldehyde group, and introducing a ketone group into the molecular chains. In the above process, the consumption of the potassium persulfate is low; the number of the terminal carboxyl groups or aldehyde groups formed by breakage of the molecular chains of the PVA is small, and the probability of cross-linking between the groups is greatly reduced. On the contrary, the breakage degree of the molecular chains of the PVA is too large, and the molecular weight is reduced.

In addition, the present invention uses the potassium persulfate to modify the PVA, and then the PVA and methyl methacrylate (MMA) are copolymerized to obtain the PMMA.

In the present invention, a remixing time is preferably 10-15 min, more preferably 11-14 min, and still more preferably 12-13 min.

In the present invention, a grinding time is preferably 3-10 min, more preferably 4-9 min, and still more preferably 5-7 min.

In the present invention, the grinding preferably comprises grinding with zirconium oxide beads. A particle size of the zirconium oxide beads is preferably 0.6-0.8 mm.

The present invention is a complete and refined integral preparation process, which better ensures the appearance and performance of the Al₂O₃-PMMA composite material and the performance of the polyolefin composite separator. The preparation method for the Al₂O₃-PMMA composite material may specifically comprise the following steps.

Aluminum oxide particles are initially dispersed, and an MMA solution and Al₂O₃ powder are mixed and stirred at a high speed for a period of time to form solution 1.

Al₂O₃-PMMA particles are prepared: solution 1 is slowly added to the oxidized PVA solution (solution 2) and is stirred for a period of time; and the solution is then ground. A grinder has both functions of grinding and dispersion, which is beneficial to quickly and uniformly including the aluminum oxide particles by the PMMA. The solution containing the prepared and molded Al₂O₃-PMMA core-shell particles is then dried and is finally subjected to centrifugal filtration to obtain Al₂O₃-PMMA particles.

According to the present invention, MMA polymerization is initiated by adopting the oxidization-modified PVA, and the MMA and the potassium persulfate modified PVA are copolymerized. By adopting a suspension polymerization method, the Al₂O₃-PMMA composite material particles can be obtained only by stirring mixing, molding, and drying. The steps are simple and feasible; the controllability is good; the conditions are mild; and it is more favorable for industrial production and application.

The present invention provides an aqueous slurry for preparing a polyolefin composite separator which comprises raw materials in percentage by mass:
20-62 parts by weight of an Al₂O₃-PMMA composite material;
16-75 parts by weight of water;
0.1-1.1 parts by weight of a dispersant;
5-13 parts by weights of an anti-settling agent;
3-11 parts by weight of a binder; and
0.1-0.8 part by weight of a wetting agent; wherein
the Al₂O₃-PMMA composite material preferably comprises the Al₂O₃-PMMA composite material in any one of the above technical solutions or the Al₂O₃-PMMA composite material prepared by the preparation method in any one of the above technical solutions.

In the present invention, the addition amount of the Al₂O₃-PMMA composite material is 20-62 parts by weight, preferably 35-47 parts by weight, and more preferably 40-42 parts by weight. The addition amount of the water is 16-75 parts by weight, preferably 26-65 parts by weight, and more preferably 36-55 parts by weight.

In the present invention, the addition amount of the dispersant is 0.1-1.1 parts by weight, preferably 0.3-0.9 parts by weight, and more preferably 0.5-0.7 parts by weight. The dispersant preferably comprises polyacrylamide.

In the present invention, the addition amount of the anti-settling agent is 5-13 parts by weight, preferably 6-12 parts by weight, more preferably 7-11 parts by weight, and still more preferably 8-10 parts by weight. The anti-settling agent preferably comprises sodium carboxymethyl cellulose.

In the present invention, the addition amount of the binder is 3-11 parts by weight, preferably 4-10 parts by weight, more preferably 5-9 parts by weight, and still more preferably 6-8 parts by weight. The binder preferably comprises one or more of styrene-butadiene latex, styrene acrylic acid, polyvinyl alcohol, polyvinylpyrrolidone, polyethylene oxide, modified paraffin resin, carbomer resin, polyacrylic acid, polyurethane acrylate, polyacrylate copolymer emulsion, polyurethane and carbamate, and more preferably comprises styrene-butadiene latex, styrene acrylic acid, polyvinyl alcohol, polyvinylpyrrolidone, polyethylene oxide, modified paraffin resin, carbomer resin, polyacrylic acid, polyurethane acrylate, polyacrylate copolymer emulsion, polyurethane or carbamate.

In the present invention, the addition amount of the wetting agent is 0.1-0.8 parts by weight, preferably 0.2-0.7 parts by weight, more preferably 0.3-0.6 parts by weight, and still more preferably 0.4-0.5 parts by weight. The wetting agent preferably comprises one or more of an organic silicon ether surfactant, an anionic surfactant and a nonionic surfactant. The anionic surfactant preferably comprises one or more of alkyl aryl sodium sulfonate, sodium butylnaphthalene sulfonate, hydroxyethyl sodium sulfonate and sodium dodecyl sulfonate, and more preferably alkyl aryl sodium sulfonate, butylnaphthalene sulfonate, hydroxyethyl sodium sulfonate or sodium dodecyl sulfonate. The nonionic surfactant preferably comprises one or more of long-chain fatty alcohol-polyoxyethylene ether, alkylphenol ethoxylate, polyoxyethylene alkylolamide and fatty alcohol-polyoxyethylene ether, and more preferably comprises long-chain fatty alcohol-polyoxyethylene ether, alkylphenol ethoxylate, polyoxyethylene alkylolamide or fatty alcohol-polyoxyethylene ether.

The present invention is a complete and refined integral preparation process, which better ensures the appearance and performance of the Al₂O₃-PMMA composite material and the performance of the polyolefin composite separator. The preparation method for the above aqueous slurry may specifically comprise the following steps.

An aqueous slurry is prepared: a certain amount of dispersant is added into water. The function of the dispersant is for dispersion, so as to prevent powdered particles from being agglomerated to form large particles and affecting the uniformity of a coating layer.

A certain number of Al₂O₃-PMMA powder particles are added and then are stirred and dispersed.

A certain amount of an anti-settling agent is added. The function of the anti-settling agent is to control the viscosity of the whole slurry and prevent the powdered particles from being precipitated.

A certain amount of a binder is added. The function of the binder is to bond a coating layer to a base membrane.

A certain amount of a wetting agent is added. The function of the wetting agent is to reduce the surface tension of the slurry and improve the leveling property in a coating process, which is beneficial to improving the coating quality. A finished slurry product is formed after this step.

According to the present invention, the aqueous slurry obtained in the above steps coats a polyolefin base membrane to obtain a coated composite separator.

The present invention further provides a polyolefin composite separator, which comprises a polyolefin base membrane; and
a composite material coating layer compounded on at least one surface of the polyolefin base membrane; wherein
the composite material comprises the Al₂O₃-PMMA composite material in any one of the above technical solutions or the Al₂O₃-PMMA composite material prepared by the preparation method in any one of the above technical solutions.

In the present invention, the composite material coating layer preferably has a micro-appearance of stacked arrangement of the Al₂O₃-PMMA particles. More specifically, the Al₂O₃-PMMA particles are preferably uniformly distributed on a surface of the polyolefin base membrane.

In the present invention, the polyolefin base membrane preferably comprises a polyethylene base membrane and/or a polypropylene base membrane, and more preferably a polyethylene base membrane or a polypropylene base membrane.

In the present invention, the composite material coating layer is obtained by coating the polyolefin base membrane with the aqueous slurry in any one of the above technical solutions.

In the present invention, a method for the coating comprises one or more of reverse gravure roller coating, rotary spraying, dip coating, electrostatic spinning, and narrow-slit extrusion coating, and more preferably reverse gravure roller coating, rotary spraying, dip coating, electrostatic spinning or narrow-slit extrusion coating.

In the present invention, the polyolefin base membrane is preferably a microporous membrane.

In the present invention, a median pore diameter of the polyolefin base membrane is preferably 25-70 nm, more preferably 35-60 nm, and still more preferably 45-50 nm.

In the present invention, a thickness of the polyolefin base membrane is preferably 3-25 µm, more preferably 8-20 µm, and still more preferably 13-15 µm.

In the present invention, a thickness of the composite material coating layer is preferably 1-5 µm, more preferably 1.5-4.5 µm, more preferably 2-4 µm, and still more preferably 2.5-3.5 µm.

In the present invention, the polyolefin composite separator preferably comprises a polyolefin composite separator for a lithium ion battery.

In the present invention, the PMMA and the Al₂O₃ particles form a unique core-shell structure, and the structure coats the separator and has the heat shrinkage resistance of the aluminum oxide and the adhesive property of the PMMA. According to the present invention, secondary gluing is not needed to be carried out on the base membrane and the ceramic separator, so that the efficiency is improved; the Al₂O₃-PMMA coating membrane has strong adhesion to a pole piece, and a battery cannot fall off during hot-press assembly; the Al₂O₃-PMMA particle coated membrane provided by the present invention has better wettability to an electrolyte solution. The Al₂O₃-PMMA particles coat a surface of the base membrane, so that the shrinkage of the separator can be inhibited, and the thermal stability of the separator can be improved.

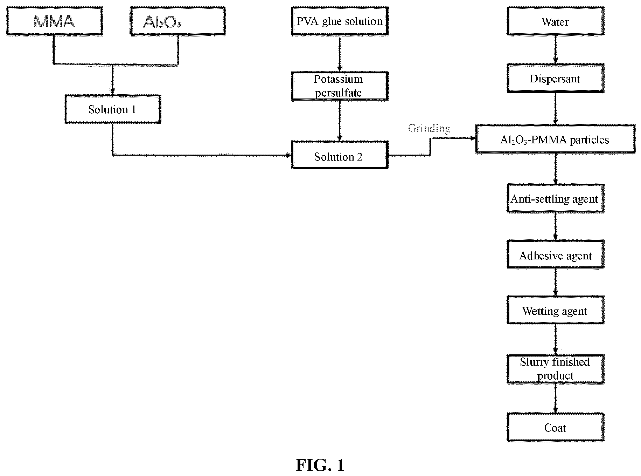

Referring to FIG. 1, FIG. 1 is a flow chart of a preparation process for a polyolefin composite separator provided according to the present invention.

According to the above steps in the present invention, the Al₂O₃-PMMA composite material with high adhesive property and high wetting efficiency is obtained; and a preparation method for the Al₂O₃-PMMA composite material, and a polyolefin composite separator are provided. According to the Al₂O₃-PMMA composite material provided by the present invention, particularly, the aluminum oxide and the PMMA are compounded to obtain the composite material having the specific core-shell structure. This is an Al₂O₃-PMMA core-shell particle having high adhesive property and high wetting efficiency. The present invention adopts the PMMA to completely include the Al₂O₃ particles inside to form spherical particles. Firstly, Al₂O₃ is an inorganic nonpolar material which has stable property and heat shrinkage resistance. The PMMA has two functions. The first function is to include the aluminum oxide particles, and the second function is to provide an adhesion force for adhesion between the separator and the pole piece, so that the composite polyolefin separator coated with the Al₂O₃-PMMA core-shell particles and provided by the present invention has the heat shrinkage resistance of the aluminum oxide and the adhesive property of the PMMA. Furthermore, in the present invention, the PVA subjected to oxidation treatment is particularly used. The PVA is a water-soluble synthetic polymer. A PVA solution is treated with potassium persulfate so that a part of molecular chains of the PVA are broken to introduce a terminal carboxyl group or an aldehyde group, and a ketone group is introduced into the molecular chains.

Since it is coated with the Al₂O₃-PMMA core-shell particles, the composite polyolefin separator provided by the present invention has higher wetting efficiency than conventional polyethylene (PE) and polypropylene (PP) base membranes and polyvinylidene fluoride (PVDF) coated membrane. A contact angle of the Al₂O₃-PMMA coated membrane is 21.4 degrees, which indicates that the Al₂O₃-PMMA coated membrane has higher wettability for an electrolyte solution. This is based on similar polarities of the PMMA and the electrolyte solution, and the rule of the likes dissolving each other is used, so that the wettability of the electrolyte solution for the coating layer can be improved. In the lithium ion battery, the electrolyte solution can fill the pores of the separator more uniformly. According to the composite separator provided by the present invention, the surface of the base membrane is coated with the Al₂O₃-PMMA particles, so that the shrinkage of the separator can be inhibited, and the thermal stability of the separator is improved. Furthermore, the Al₂O₃-PMMA particles have a larger particle size, are regularly stacked on the surface of the separator, and have a more obvious inhibiting effect on the thermal shrinkage of the separator, so that the thermal stability of the separator is more outstanding. The preparation process in the present invention is simple; the conditions are mild; and the controllability is good. Further, the modified PVA is also used to initiate MMA copolymerization. A suspension copolymerization method is simper and is suitable for industrial popularization and application.

Experimental results show that the composite separator containing the Al₂O₃-PMMA particle coating layer and provided by the present invention has low air permeability increment (the increment per unit thickness is less than 10 S/100 mL); the hot-pressing bonding force reaches 15 N/m or above; the thermal shrinkage is improved compared with that of the PE separator; and the thermal shrinkage of the Al₂O₃-PMMA coated membrane is less than 1.0%.

In order to further illustrate the present invention, the Al₂O₃-PMMA composite material and the preparation method thereof, and the polyolefin composite separator provided by the present invention are described in detail below in combination with embodiments. However, it should be understood that these embodiments are carried out on the premise of the technical solutions of the present invention, and detailed implementation modes and specific operation processes are provided, which are only for further illustrating the features and advantages of the present invention, but not for limiting the claims of the present invention. The protection scope of the present invention is not limited to the following embodiments.

### Embodiment 1

### Preparation of Al₂O₃-PMMA particles:

1). 2 kg of an MMA solution and 0.1 kg of Al₂O₃ powder were mixed and were stirred at a rotation speed of 500-800 rpm for 60 min to form solution 1. The MMA solution had a solid content of 40%, and the Al₂O₃ powder was highly pure aluminum oxide for a lithium battery separator and had a particle size of 0.6-1 µm.
2). Preparation of a PVA glue solution: 3.7 kg of PVA powder was dissolved in 33.3 kg of water at a temperature of 60-90 °C and was stirred for 3 h at a rotation speed of 300-600 rpm.
3). Oxidation treatment of PVA: 0.01 kg of potassium persulfate was added into the prepared PVA solution and was stirred at a rotation speed of 500-800 rpm for 60 min to form solution 2.
4). Preparation of Al₂O₃-PMMA particles: solution 1 was slowly added into solution 2 and was stirred at a rotation speed of 500 rpm for 10 min; the mixed solution was ground with zirconium oxide beads having a particle size of 0.6-0.8 mm in a grinding machine; the grinding was carried out cyclically for three times at a rotation speed of 500 rpm; an Al₂O₃-PMMA core-shell particle solution molded after re-grinding was dried at 60 °C for 12 h; and centrifugal filtration was finally carried out to obtain Al₂O₃-PMMA powder particles.

The Al₂O₃-PMMA powder particles prepared in Embodiment 1 of the present invention were characterized.

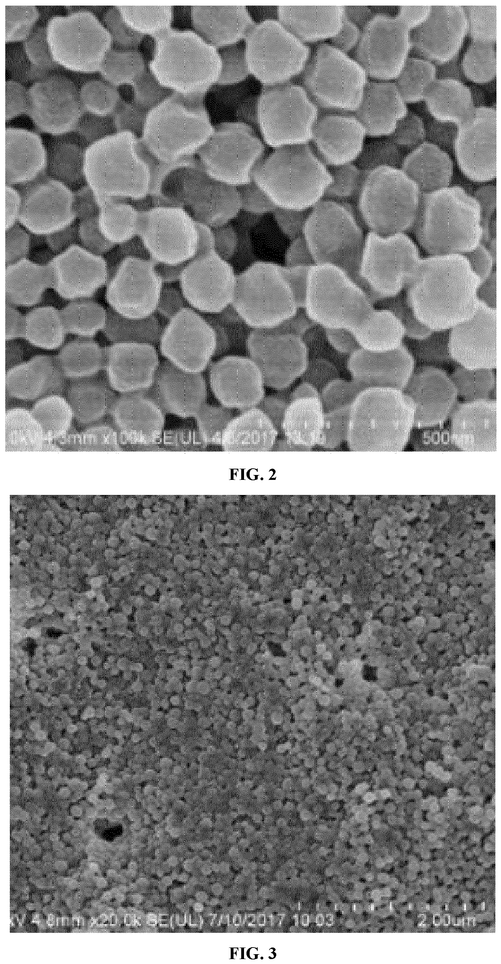

Referring to FIG. 2, FIG. 2 is an SEM scanning electron micrograph of the Al₂O₃-PMMA powder particles prepared in Embodiment 1 of the present invention.

### Preparation of slurry:

1). 47 kg of water was added; 0.5 kg of a dispersant was then added and stirred at a rotation speed of 500 rpm for 30 min, the dispersant being polyacrylamide.
2). 40 kg of the Al₂O₃-PMMA powder particles was added and stirred at a rotation speed of 500 rpm for 45 min.
3). 8.5 kg of an anti-settling agent was added and stirred at a rotation speed of 500 rpm for 45 min, the anti-settling agent being sodium carboxymethyl cellulose and a concentration range being 1.5%-8%.
4). 6 kg of a binder was added and stirred at a rotation speed of 500 rpm for 60 min, the binder being an acrylic acid binder.
5). 0.3 kg of a wetting agent was added and stirred at a rotation speed of 250 rpm for 30 min to form a finished slurry product. The wetting agent was an organic silicon ether surfactant, and specifically polyether modified trisiloxane.

The prepared finished slurry product was coated. This embodiment adopts reverse gravure roller coating. A coating layer had a thickness of 3 microns, and a polyolefin composite separator was obtained.

The polyolefin composite separator prepared in Embodiment 1 of the present invention was characterized.

Referring to FIG. 3, FIG. 3 is an SEM scanning electron micrograph of the polyolefin composite separator prepared in Embodiment 1 of the present invention.

As can be seen from FIG. 3, the Al₂O₃-PMMA particles had a large particle size and were regularly stacked on a surface of the separator.

The polyolefin composite separator prepared in Embodiment 1 of the present invention was subjected to performance test.

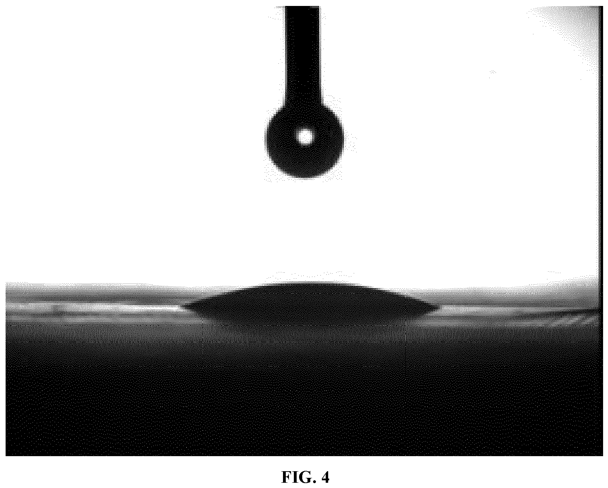

Referring to FIG. 4, FIG. 4 is a contact angle image of an Al₂O₃-PMMA slurry prepared according to the present invention.

Wetting efficiency: as shown in the contact angle image of the Al₂O₃-PMMA slurry in FIG. 4, the contact angle of the Al₂O₃-PMMA coated membrane was 21.4 degrees, which indicates that the Al₂O₃-PMMA coated membrane has better wettability to an electrolyte solution. This is because the polarity of PMMA is similar to that of the electrolyte solution, so that the wettability of the electrolyte solution to the coating layer can be improved. In the lithium ion battery, the electrolyte solution can fill the pores of the separator more uniformly.

Thermal shrinkage: the heat shrinkage rates of the Al₂O₃-PMMA coated membrane in an MD direction and a TD direction are both less than 1.0%. The Al₂O₃-PMMA particles coat the surface of the base membrane, so that the shrinkage of the separator can be inhibited, and the thermal stability of the separator is improved.

Hot-pressing bonding force: the hot-pressing bonding force reaches 15 N/m or above, which provides high bonding force between the separator and a pole piece, so that the battery cannot fall off during hot-pressing assembly.

### Embodiment 2

### Preparation of Al₂O₃-PMMA particles:

1). 2 kg of an MMA solution and 0.1 kg of Al₂O₃ powder were mixed and were stirred at a rotation speed of 500-800 rpm for 60 min to form solution 1. The MMA solution had a solid content of 40%, and the Al₂O₃ powder was highly pure aluminum oxide for a lithium battery separator and had a particle size of 0.6-1 µm.
2). Preparation of a PVA glue solution: 3.7 kg of PVA powder was dissolved in 33.3 kg of water at a temperature of 60-90 °C and was stirred for 3 h at a rotation speed of 300-600 rpm.
3). Oxidation treatment of PVA: 0.01 kg of potassium persulfate was added into the prepared PVA solution and was stirred at a rotation speed of 500-800 rpm for 60 min to form solution 2.
4). Preparation of Al₂O₃-PMMA particles: solution 1 was slowly added into solution 2 and was stirred at a rotation speed of 500 rpm for 10 min; the mixed solution was ground with zirconium oxide beads having a particle size of 0.6-0.8 mm in a grinding machine; the grinding was carried out cyclically for three times at a rotation speed of 500 rpm; an Al₂O₃-PMMA core-shell particle solution molded after re-grinding was dried at 60 °C for 12 h; and centrifugal filtration was finally carried out to obtain Al₂O₃-PMMA powder particles.

### Preparation of slurry:

1). 47 kg of water was added; 0.6 kg of a dispersant was then added and stirred at a rotation speed of 500 rpm for 30 min, the dispersant being polyacrylamide.
2). 45 kg of the Al₂O₃-PMMA powder particles was added and stirred at a rotation speed of 500 rpm for 45 min.
3). 8.5 kg of an anti-settling agent was added and stirred at a rotation speed of 500 rpm for 45 min, the anti-settling agent being sodium carboxymethyl cellulose and a concentration range being 1.5%-8%.
4). 6.5 kg of a binder was added and stirred at a rotation speed of 500 rpm for 60 min, the binder being an acrylic acid binder.
5). 0.3 kg of a wetting agent was added and stirred at a rotation speed of 250 rpm for 30 min to form a finished slurry product. The wetting agent was an organic silicon ether surfactant, and specifically polyether modified trisiloxane.

The prepared finished slurry product was coated. This embodiment adopts reverse gravure roller coating. A coating layer had a thickness of 3 microns, and a polyolefin composite separator was obtained.

The polyolefin composite separator prepared in Embodiment 2 of the present invention was characterized.

The results showed that the Al₂O₃-PMMA particles had a larger particle size and were regularly stacked on a surface of the separator.

The polyolefin composite separator prepared in Embodiment 2 of the present invention was subjected to performance test.

Wetting efficiency: the contact angle of the Al₂O₃-PMMA coated membrane was 19.8 degrees, which indicates that the Al₂O₃-PMMA coated membrane has better wettability to an electrolyte solution. This is because the polarity of PMMA is similar to that of the electrolyte solution, so that the wettability of the electrolyte solution to the coating layer can be improved. In the lithium ion battery, the electrolyte solution can fill the pores of the separator more uniformly.

Thermal shrinkage: the heat shrinkage rates of the Al₂O₃-PMMA coated membrane in an MD direction and a TD direction are both less than 0.8%. The Al₂O₃-PMMA particles coats the surface of the base membrane, so that the shrinkage of the separator can be inhibited, and the thermal stability of the separator is improved.

Hot-pressing bonding force: the hot-pressing bonding force reaches 19 N/m or above, which provides high bonding force between the separator and a pole piece, so that the battery cannot fall off during hot-pressing assembly.

### Embodiment 3

### Preparation of Al₂O₃-PMMA particles:

1). 2.35 kg of an MMA solution and 0.1 kg of Al₂O₃ powder were mixed and were stirred at a rotation speed of 500-800 rpm for 60 min to form solution 1. The MMA solution had a solid content of 40%, and the Al₂O₃ powder was highly pure aluminum oxide for a lithium battery separator and had a particle size of 0.6-1 µm.
2). Preparation of a PVA glue solution: 4.0 kg of PVA powder was dissolved in 33.3 kg of water at a temperature of 60-90 °C and was stirred for 3 h at a rotation speed of 300-600 rpm.
3). Oxidation treatment of PVA: 0.01 kg of potassium persulfate was added into the prepared PVA solution and was stirred at a rotation speed of 500-800 rpm for 60 min to form solution 2.
4). Preparation of Al₂O₃-PMMA particles: solution 1 was slowly added into solution 2 and was stirred at a rotation speed of 500 rpm for 10 min; the mixed solution was ground with zirconium oxide beads having a particle size of 0.6-0.8 mm in a grinding machine; the grinding was carried out cyclically for three times at a rotation speed of 500 rpm; an Al₂O₃-PMMA core-shell particle solution molded after re-grinding was dried at 60 °C for 12 h; and centrifugal filtration was finally carried out to obtain Al₂O₃-PMMA powder particles.

### Preparation of slurry:

1). 47 kg of water was added; 0.5 kg of a dispersant was then added and stirred at a rotation speed of 500 rpm for 30 min, the dispersant being polyacrylamide.
2). 40 kg of the Al₂O₃-PMMA powder particles was added and stirred at a rotation speed of 500 rpm for 45 min.
3). 8.5 kg of an anti-settling agent was added and stirred at a rotation speed of 500 rpm for 45 min, the anti-settling agent being sodium carboxymethyl cellulose and a concentration range being 1.5%-8%.
4). 6 kg of a binder was added and stirred at a rotation speed of 500 rpm for 60 min, the binder being an acrylic acid binder.
5). 0.3 kg of a wetting agent was added and stirred at a rotation speed of 250 rpm for 30 min to form a finished slurry product. The wetting agent was an organic silicon ether surfactant, and specifically polyether modified trisiloxane.

The prepared finished slurry product was coated. This embodiment adopts reverse gravure roller coating. A coating layer had a thickness of 3 microns, and a polyolefin composite separator was obtained.

The polyolefin composite separator prepared in Embodiment 3 of the present invention was characterized.

The results showed that the Al₂O₃-PMMA particles had a larger particle size and were regularly stacked on a surface of the separator.

The polyolefin composite separator prepared in Embodiment 3 of the present invention was subjected to performance test.

Wetting efficiency: the contact angle of the Al₂O₃-PMMA coated membrane was 22 degrees, which indicates that the Al₂O₃-PMMA coated membrane has better wettability to an electrolyte solution. This is because the polarity of PMMA is similar to that of the electrolyte solution, so that the wettability of the electrolyte solution to the coating layer can be improved. In the lithium ion battery, the electrolyte solution can fill the pores of the separator more uniformly.

Thermal shrinkage: the heat shrinkage rates of the Al₂O₃-PMMA coated membrane in an MD direction and a TD direction are both less than 1.1%. The Al₂O₃-PMMA particles coats the surface of the base membrane, so that the shrinkage of the separator can be inhibited, and the thermal stability of the separator is improved.

Hot-pressing bonding force: the hot-pressing bonding force reaches 25 N/m or above, which provides high bonding force between the separator and a pole piece, so that the battery cannot fall off during hot-pressing assembly.

The above describes the Al₂O₃-PMMA composite material with high adhesive property and high wetting efficiency and the preparation method thereof, and the polyolefin composite separator provided by the present invention in detail. The principles and implementation modes of the present invention are described herein using specific examples. The illustration of the above embodiments are only to help understand the method of the present invention and its core concepts, including the best mode, and to enable any person skilled in the art to practice the present invention, including making and using any devices or systems and implementing any incorporated methods. It should be pointed out that for those skilled in the art, without departing from the principle of the present invention, several improvements and modifications can also be made to the present invention, and these improvements and modifications also fall within the protection scope of the claims of the present invention. The patentable protection scope of the present invention is defined by the claims, and may include other embodiments that occur to those skilled in the art. These other embodiments are intended to fall within the scope of the claims if they have structural elements that do not differ from the literal expression of the claims, or if they include equivalent structural elements with insubstantial differences from the literal expression of the claims.

## Claims

1. An Al₂O₃-PMMA composite material, comprising Al₂O₃ particles and a polymethyl methacrylate (PMMA) layer compounded on a surface of the Al₂O₃, wherein
the composite material has an appearance of spheroidal particles;
the composite material has a core-shell structure;
a mass ratio of the Al₂O₃ to the PMMA is 1: (30-50);
a molecular weight of the PMMA is 80000-200000 g/mol.

2. The composite material according to claim 1, wherein the Al₂O₃ particles have a particle size of 0.6-1.5 µm;
the Al₂O₃-PMMA composite material has a particle size of 1.0-3.0 µm.

3. A preparation method for the Al₂O₃-PMMA composite material according to any one of claims 1 to 2, comprising the following steps:
1) mixing a methyl methacrylate solution and Al₂O₃ powder to obtain a mixed solution; and
2) mixing the mixed solution obtained in the above step with an oxidization-modified polyvinyl acetate (PVA) solution again, grinding the mixture, and drying the mixture to obtain Al₂O₃-PMMA particles.

4. The preparation method according to claim 3, wherein a mass concentration of the methyl methacrylate solution is 35-45%;
a particle size of the Al₂O₃ powder is 0.6-1 µm;
a mixing time is 20-60 min;
a rotation speed for mixing is 500-800 rpm.

5. The preparation method according to claim 3, wherein the oxidation-modified PVA solution comprises an oxidation-modified PVA aqueous solution;
a method for the oxidation modification comprises oxidation modification for potassium persulfate;
a mass ratio of the potassium persulfate to the PVA is 1: (330-400);
a remixing time is 10-15 min;
a grinding time is 3-10 min.

6. An aqueous slurry for preparing a polyolefin composite separator, comprising raw materials in percentage by mass:
20-62 parts by weight of an Al₂O₃-PMMA composite material;
16-75 parts by weight of water;
0.1-1.1 parts by weight of a dispersant;
5-13 parts by weights of an anti-settling agent;
3-11 parts by weight of a binder; and
0.1-0.8 part by weight of a wetting agent; wherein
the Al₂O₃-PMMA composite material comprises the Al₂O₃-PMMA composite material according to any one of claims 1 to 2 or the Al₂O₃-PMMA composite material prepared by the preparation method according to any one of claims 3 to 5.

7. The aqueous slurry according to claim 6, wherein the dispersant comprises polyacrylamide;
the anti-settling agent comprises sodium carboxymethyl cellulose;
the binder comprises one or more of butylbenzene latex, cinnamic acid, polyvinyl alcohol, polyvinylpyrrolidone, polyethylene oxide, modified paraffin resin, carbomer resin, polyacrylic acid, polyurethane acrylate, polyacrylate copolymer emulsion, polyurethane and carbamate;
the wetting agent comprises one or more of an organic silicon ether surfactant, an anionic surfactant and a nonionic surfactant;
the anionic surfactant comprises one or more of alkyl aryl sodium sulfonate, sodium butylnaphthalene sulfonate, hydroxyethyl sodium sulfonate and sodium dodecyl sulfonate;
the nonionic surfactant comprises one or more of long-chain fatty alcohol-polyoxyethylene ether, alkylphenol ethoxylate, polyoxyethylene alkylolamide and fatty alcohol-polyoxyethylene ether.

8. A polyolefin composite separator, comprising a polyolefin base membrane; and
a composite material coating layer compounded on at least one surface of the polyolefin base membrane; wherein
the composite material comprises the Al₂O₃-PMMA composite material according to any one of claims 1 to 2 or the Al₂O₃-PMMA composite material prepared by the preparation method according to any one of claims 3 to 5.

9. The polyolefin composite separator according to claim 8, wherein the composite material coating layer has a micro-appearance of stacked arrangement of the Al₂O₃-PMMA particles;
the Al₂O₃-PMMA particles are uniformly distributed on a surface of the polyolefin base membrane;
the polyolefin base membrane comprises a polyethylene base membrane and/or a polypropylene base membrane;
the composite material coating layer is obtained by coating the polyolefin base membrane with the aqueous slurry according to any one of claims 6 to 7;
a method for the coating comprises one or more of reverse gravure roller coating, rotary spraying, dip coating, electrostatic spinning, and narrow-slit extrusion coating.

10. The polyolefin composite separator according to claim 8, wherein the polyolefin base membrane is a microporous membrane;
a median pore diameter of the polyolefin base membrane is 25-70 nm;
a thickness of the polyolefin base membrane is 3-25 µm;
a thickness of the composite material coating layer is 1-5 µm;
the polyolefin composite separator comprises a polyolefin composite separator for a lithium ion battery.
